# EUROPÄISCHE PATENTANMELDUNG

(11) **EP 1 068 965 A2**
(43) Veröffentlichungstag der Anmeldung: **17.01.2001**
(21) Anmeldenummer: 00113881.7
(22) Anmeldetag: 30.06.2000
(51) Int. Cl.: B60G 7/00, B60G 3/16, B60G 21/055, F16F 1/368

(54) **Radaufhängung bei einem Kraftfahrzeug**

(30) Priorität: 16.07.1999 DE 19933432
(71) Anmelder: DaimlerChrysler AG, 70567 Stuttgart (DE)
(72) Erfinder: Albers, Hartmut, 70178 Stuttgart (DE); Fischer, Gunter, 73728 Esslingen (DE); Hack, Rainer, 74336 Rackenheim (DE); Siebelt, Dirk, 73773 Aichwald (DE); Steffens, Markus, 67722 Winnweiler (DE)

(57) **Zusammenfassung**

Die Erfindung betrifft eine Aufhängung für ein Rad bei einem Kraftfahrzeug, inbesondere bei einem Personenkraftwagen, mit einem Lenker aus Faserverbundwerkstoff, der einenends mit einer Lagerung an einem Chassis des Fahrzeuges gelagert ist und anderenends das Rad haltert, und mit Federmitteln aus Faserverbundwerkstoff, die den Lenker am Chassis federnd abstützen.

Um einen besonders kompakten Aufbau für die Radaufhängung zu erzielen, weist die Lagerung ein Lager auf, bei dem ein am Chassis befestigtes Lagerteil relativ zu einem am Lenker befestigten Lagerteil um eine Schwenkachse schwenkverstellbar gelagert ist, wobei die Federmittel eine Drehstabfederung aufweisen, die sich koaxial zur Schwenkachse erstreckt und die einenends am Chassis oder am chassisfesten Lagerteil und anderends am Lenker oder am lenkerfesten Lagerteil befestigt ist.

## Beschreibung

Die Erfindung betrifft eine Aufhängung für ein Rad bei einem Kraftfahrzeug, insbesondere bei einem Personenkraftwagen, mit den Merkmalen des Oberbegriffes des Anspruches 1.

Eine herkömmliche Radaufhängung dieser Art weist einen als Längslenker ausgebildeten Lenker auf, der einenends mit einer Lagerung an einem Chassis des Fahrzeuges gelagert ist und an dem anderenends das Rad gehaltert ist. Außerdem weist eine solche Radaufhängung überlicherweise Federmittel auf, die den Lenker am Chassis federnd abstützen. Um solche Federmittel in der Radaufhängung unterbringen zu können, muß der dazu erforderliche Bauraum vorhanden sein. Dieser Einbauraum steht, insbesondere bei Kleinwagen, oftmals nicht zur Verfügung.

Die vorliegende Erfindung beschäftigt sich mit dem Problem, für eine Radaufhängung der eingangs genannten Art eine Ausführungsform anzugeben, die einen geringen Einbauraum benötigt.

Dieses Problem wird erfindungsgemäß durch eine Radaufhängung mit den Merkmalen des Anspruches 1 gelöst. Durch die Ausbildung der Federmittel als Drehstabfederung kann für die Radaufhängung ein Aufbau realisiert werden, der mit einem relativ geringen Einbauraum auskommt.

Ein besonders kompakter Aufbau ergibt sich dann, wenn die Drehstabfederung aus zwei in Reihe geschalteten Drehstabfedern gebildet ist, die koaxial zueinander angeordnet sind, wobei zumindest die eine Drehstabfeder rohrförmig ausgebildet ist und die andere Drehstabfeder konzentrisch umgibt.

Bei einer vorteilhaften Weiterbildung kann ein Drehstabstabilisator aus Faserverbundwerkstoff vorgesehen sein, der rohrförmig ausgebildet ist, sich koaxial zur Schwenkachse des Lenkers am Chassis erstreckt, die Drehstabfederung konzentrisch umgibt, einenends direkt oder indirekt am Lenker der Radaufhängung und anderenends direkt oder indirekt an einem Lenker einer auf derselben Fahrzeugachse gegenüberliegenden, entsprechend aufgebauten zweiten Radaufhängung befestigt ist. Auf diese Weise sind die beiden Radaufhängungen einer Achse miteinander zwangsgekoppelt, wodurch sich eine Stabilisierungswirkung für den Fahrzeugaufbau bei Lastwechseln, insbesondere bei Kurvenfahrt, erzielen läßt.

Entsprechend einer vorteilhaften Ausführungsform kann der Lenker als Blattfederung ausgebildet sein, die vorzugsweise U-förmig ausgebildet ist und zwei im wesentlichen äquidistant zueinander verlaufende Federschenkel aufweist, die einenends an einem lenkerfesten Lagerteil einer den Lenker am Chassis lagernden Lagerung und anderenends über einen Steg miteinander verbunden sind, an dem das Rad gehaltert ist. Auf diese Weise bildet der Lenker selbst ein weiteres Federmittel zur Abstützung des Rades am Chassis. Durch die Reihenschaltung der Blattfederung und der Drehstabfederung können besonders zweckmäßige Federungscharakteristiken erzeugt werden. Insbesondere können die Federschenkel mit einer S-förmigen Vorkrümmung versehen sein, die bei vertikaler Belastung des Rades, d.h. beim Einfedern, den Lenker verlängert und bei Entlastung, d.h. beim Ausfedern, verkürzt. Durch diese Maßnahme kann die Relativlage des Rades am Chassis in vorteilhafter Weise dynamisch, d.h. in Abhängigkeit der am Fahrzeug auftretenden Kräfte, gezielt variiert werden.

Weitere wichtige Merkmale und Vorteile der erfindungsgemäßen Radaufhängung ergeben sich aus den Unteransprüchen, aus den Zeichnungen und aus der zugehörigen Figurenbeschreibung anhand der Zeichnungen.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert.

Es zeigen, jeweils schematisch,
- Fig. 1: eine vereinfachte Seitenansicht auf eine Radaufhängung nach der Erfindung und
- Fig. 2: eine vereinfachte Draufsicht auf die Radaufhängung gemäß Fig. 1.

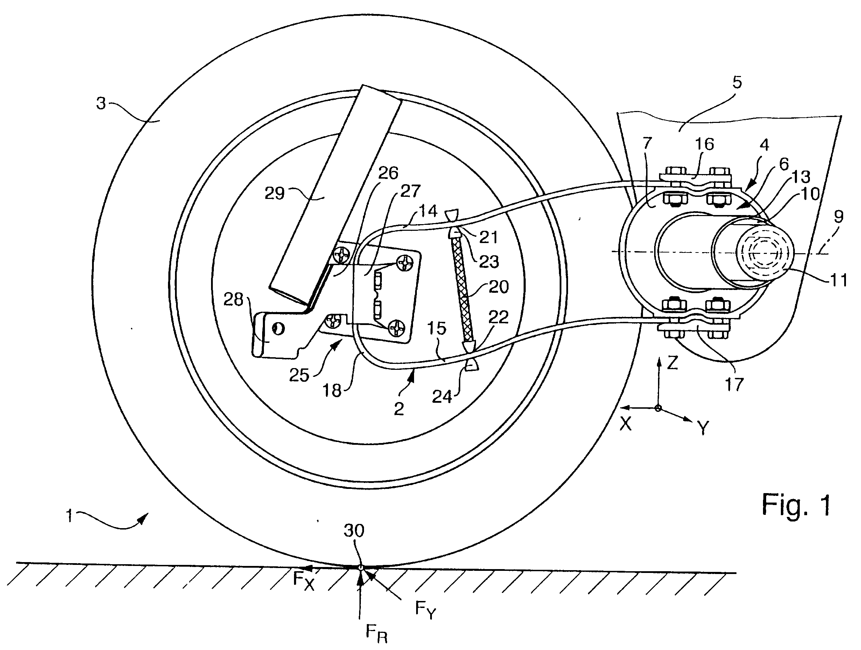

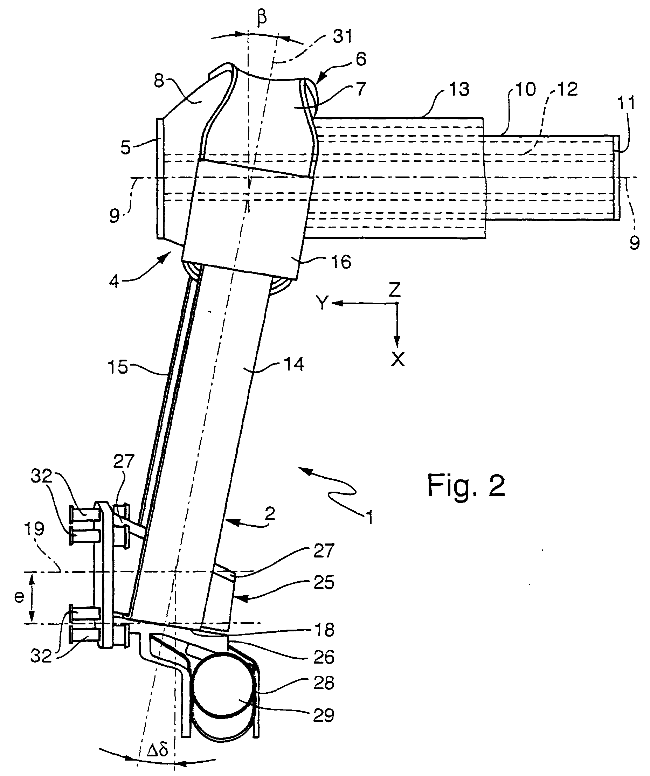

Entsprechend den Fig. 1 und 2 weist eine Radaufhängung 1 einen als U-förmige Blattfeder ausgebildeten Lenker 2 auf, der sich im wesentlichen in Richtung einer Längsrichtung oder Längsachse X eines im übrigen nicht dargestellten Fahrzeuges erstreckt. Der Lenker 2 bildet demnach einen Längslenker. Der Lenker 2 haltert an einem entsprechend Fig. 1 linken Ende ein Rad 3, wobei die zugehörige Radlagerung in den Figuren weggelassen ist und in herkömmlicher Weise ausgebildet sein kann. An seinem anderen, entsprechend Fig. 1 rechten Ende ist der Lenker 2 mittels einer Lagerung 4 an einem nur andeutungsweise dargestellten Chassis 5 des Fahrzeuges gelagert.

Diese Lagerung 4 wird durch ein Lager 6 gebildet, das zumindest zwei Lagerteile 7 und 8 aufweist. An dem einen Lagerteil 7 ist der Lenker 2 befestigt, während das andere Lagerteil 8 am Chassis 5 befestigt ist. Das lenkerfeste Lagerteil 7 ist am Lager 6 um eine Schwenkachse 9 relativ zum chassisfesten Lagerteil 8 schwenkbar gelagert. Auf diese Weise kann der Lenker 2 Schwenkbewegungen um die Schwenkachse 9 durchführen. Die Schwenkachse 9 verläuft parallel zu einer Querrichtung oder Querachse Y des Fahrzeuges.

Die erfindungsgemäße Radaufhängung 1 weist außerdem eine rohrförmige erste Drehstabfeder 10 auf, die sich koaxial zur Schwenkachse 9 erstreckt und mit einem axialen Ende am lenkerfesten Lagerteil 7 drehfest befestigt ist. An ihrem anderen axialen Ende ist an der ersten Drehstabfeder 10 ein scheibenförmiges Kopplungsglied 11 befestigt, insbesondere angeschweißt. Diese erste Drehstabfeder 10 ist mit einer zweiten Drehstabfeder 12 in Reihe geschaltet, die zu diesem Zweck mit einem axialen Ende ebenfalls an dem Kopplungsglied 11, insbesondere durch Verschweißen, befestigt ist. An ihrem anderen axialen Ende ist die zweite Drehstabfeder 12 am Chassis 5 oder am chassisfesten Lagerteil 8 befestigt. Die zweite Drehstabfeder 12 ist hier ebenfalls als Rohr ausgebildet und erstreckt sich koaxial und konzentrisch im Inneren der ersten Drehstabfeder 10. Auf diese Weise ergibt sich eine besonders kompakte Drehstabfederung (10,11,12) für den Lenker 2.

Koaxial zur Drehstabfederung (10,11,12) ist ein rohrförmiger Drehstabstabilisator 13 angeordnet, der die Drehstabfedern 10 und 12 konzentrisch umgibt und einenends am lenkerfesten Lagerteil 7 und anderenends bei einer nicht dargestellten, entsprechend aufgebauten zweiten Radaufhängung, die an derselben Fahrzeugachse gegenüberliegend an der anderen Fahrzeugseite angeordnet ist, ebenfalls am dort vorgesehenen lenkerfesten Lagerteil befestigt ist. Der Drehstabstabilisator 13 bildet somit eine Zwangskopplung der Radaufhängungen, durch die eine fahrdynamisch vorteilhafte Stabilisierung des Chassis 5 bei Lastwechseln, z.B. bei Kurvenfahrt, erzielt werden kann.

Die Drehstabfedern 10, 12 und der Drahstabstabilisator 13 weisen vorzugsweise eine zylindrische, insbesondere kreiszylindrische Form auf.

Die U-förmige Blattfederung, die durch den Lenker 2 ausgebildet ist, weist zwei im wesentlichen mit gleichbleibendem Abstand zueinander verlaufende Federschenkel 14 und 15 auf, die an ihren lagerseitigen Enden am lenkerfesten Lagerteil 7 befestigt sind. Zu diesem Zweck sind die freien Enden der Federschenkel 14 und 15 jeweils mittels einer Klemmplatte 16 bzw. 17 mit dem lenkerfesten Lagerteil 7, durch eine Verschraubung, verspannt. An ihren radseitigen Enden sind die beiden Federschenkel 14 und 15 über einen gemeinsamen Steg 18 miteinander verbunden. Insbesondere können die Federschenkel 14 und 15 zusammen mit dem Steg 18 einteilig hergestellt sein.

Die Federschenkel 14 und 15 sind mit einer S-förmigen Vorkrümmung versehen, die bei einer nach oben gerichteten vertikalen Belastung des Rades 3, d.h. bei einer Radlast F_{R}, bei der das Rad 3 einfedert, eine Relativbewegung verursacht, durch die sich der Lenker 2 in Längsrichtung X des Fahrzeuges verlängert, so daß der Abstand zwischen einer Radachse 19, um welche sich das Rad 3 dreht, und der Schwenkachse 9 vergrößert. Diese Kinematik kann sich positiv auf das Lenkverhalten des Fahrzeuges auswirken.

Zwischen den beiden Federschenkeln 14 und 15 kann wenigstens an einer Stelle ein Stützelement 20 angeordnet sein, das an jedem der Federschenkel 14 und 15 so abgestütz ist, daß es daran Schwenkbewegungen um eine quer zur Längserstreckung der Federschenkel 14 bzw. 15 verlaufende Achse 21 bzw. 22 durchführen kann. Zu diesem Zweck ist das Stützelement 20 mit geeigneten Klemmelementen 23 bzw. 24 an den Federschenkeln 14 und 15 fixiert. Das Stützelement 20 erstreckt sich zwischen den Federschenkeln 14 und 15 vorzugsweise quer zu deren Längserstreckung. Ein derartiges Stützelement 20 bewirkt eine Stabilisierung der durch den Lenker 2 gebildeten Blattfederung.

Die beiden Federschenkel 14 und 15 der Blattfederung (Lenker 2) sind zumindest abschnittsweise als Biegeträger ausgebildet, die jeweils dieselbe Biegenormalspannung aufweisen. Die Federschenkel 14 und 15 sind dazu vorzugsweise als Rechteck-, Parabel-, Hyperbel- oder Keilblattfedern ausgebildet.

Am Steg 18 ist eine Radhalterung 25 befestigt, die bei der vorliegenden Ausführungsform aus zwei Bestandteilen, nämlich aus einem ersten Halterungsteil 26 und aus einem zweiten Halterungsteil 27, gebildet ist, die zwischen sich den Steg 18 aufnehmen, durch eine entsprechende Verschraubung verspannen und fixieren. Vorzugsweise ist in einem der beiden Halterungsteile 26 bzw. 27 eine Aussparung zur Aufnahme des Steges 18 ausgebildet, um auf diese Weise eine formschlüssige Anbindung des Steges 18 an der Halterung 25 zu erzielen. Am ersten Halterungsteil 26 ist ein Träger 28 angeformt, an dem ein Stoßdämpfer 29 angelenkt ist und sich auf diese Weise am Lenker 2 abstützt. Die Verbindung zwischen Stoßdämpfer 29 und zugehörigem Träger 28 kann in herkömmlicher Weise ausgestaltet werden und ist hier zur Wahrung der Übersichtlichkeit weggelassen. An seinem vom Träger 28 abgewandten Ende stützt sich der Stoßdämpfer 29 in herkömmlicher Weise am Chassis 5 ab. Da auch eine solche Abstützung allgemein bekannt ist, ist sie in den Figuren nicht dargestellt. Das zweite Halterungsteil 27 dient zur Befestigung, z.B. durch eine Verschraubung 32, einer nicht dargestellten Radlagerung, an der in herkömmlicher Weise das Rad 3 gelagert ist.

Der Stoßdämpfer 29 ist vorzugsweise so angeordnet, daß er Momente, die aus einer in Querrichtung Y des Fahrzeuges an einem Radaufstandspunkt 30 auf das Rad 3 übertragenen Seitenkraft F_{Y} resultieren, aufnimmt und abstützt. Darüber hinaus ist der Stoßdämpfer 29 vorzugsweise so angeordnet, daß sich beim Einfedern des Rades 3 eine definierte Sturzänderung und eine damit einhergehende Verdrillung der Blattfederung 2 ausbildet.

Entsprechend Fig. 2 ist der Lenker 2 so angeordnet, daß seine Längsachse 31 gegenüber der Fahrzeuglängsrichtung X um einen Winkel β geneigt verläuft. Durch diese Maßnahme ist das chassisseitige Ende des Lenkers 2 bezüglich einer Fahrzeugmittelebene weiter innen angeordnet als das radseitige Ende des Lenkers 2. Dadurch ergibt sich einerseits ein größerer Freiraum für den Lenkeinschlag des Rades 3, andererseits werden die am Lenker 2 angreifenden Hebelverhältnisse beeinflußt, wodurch sich eine gewünschte Federungskinematik für das Rad 3 ausbilden läßt. Außerdem hat diese Anordnung zur Folge, daß sich die Länge des Lenkers bzw. der Abstand zwischen Radachse 19 und Schwenkachse 9 vergrößert, wenn Seitenkräfte F_{Y} von außen nach innen auf das Rad 3 einwirken. Das bedeutet, daß die so vorgegebene Kinematik ein gezieltes Untersteuern bzw. Übersteuern des jeweiligen Rades 3 erzeugt.

Das zweite Halterungsteil 27 ist so ausgebildet, daß sich zwischen dem Steg 18, an dem die Radhalterung 25 befestigt ist, und der Radachse 19 ein Abstand e ausbildet. Dieser Abstand e führt dazu, daß auf das Rad 3 einwirkende Seitenkräfte F_{Y} eine Verdrehung des Steges 18 um eine Vertikalachse bewirken, wodurch sich eine Spuränderung Δδ für das Rad 3 ausbildet.

Die Blattfederung, d.h. der Lenker 2, und die Federschenkel 14, 15 und die Drehstabfedern 10,12 und die Stützelemente 20 und der Drehstabstabilisator 13 sind aus einem Faserverbundwerkstoff hergestellt. Dabei ist es möglich, den Steg 18 der Blattfederung 2 aus einem anderen Werkstoff herzustellen als die Federschenkel 14 und 15. Ebenso ist es möglich, daß der Steg 18 der Blattfederung 2 einen anderen Werkstoffaufbau aufweist als die Federschenkel 14 und 15. Die Blattfederung 2, d.h. der Lenker 2, wird vorzugsweise in einem Prepreg-Lege-Verfahren hergestellt. Ebenso ist es möglich, die Blattfederung 2 mit einem Harzinjektions-Verfahren oder mit einem daraus abgeleiteten Herstellungsverfahren herzustellen. Die Drehstabfedern 10 und 12 sowie der Drehstabstabilisator 13 können beispielsweise mit einem Wickel-Verfahren oder mit einem Flecht-Verfahren hergestellt werden. Die strebenartigen Stützelemente 20 werden vorzugsweise durch Umformung thermoplastischer Faserverbundhalbzeuge hergestellt.

## Patentansprüche

1. Aufhängung für ein Rad bei einem Kraftfahrzeug, insbesondere Personenkraftwagen, mit einem Lenker (2), der einenends mit einer Lagerung (4) an einem Chassis (5) des Fahrzeuges gelagert ist und anderenends das Rad (3) haltert, und mit Federmitteln (10,11,12,14,15) aus Faserverbundwerkstoff, die den Lenker (2) am Chassis (5) federnd abstützen, wobei die Lagerung (4) ein Lager (6) aufweist, bei dem ein am Chassis (5) befestigtes Lagerteil (8) relativ zu einem am Lenker (2) befestigten Lagerteil (7) um eine Schwenkachse (9) schwenkverstellbar gelagert ist, und wobei die Federmittel eine Drehstabfederung (10,11,12) aufweisen, die sich koaxial zur Schwenkachse (9) erstreckt und die einenends am Chassis (5) oder am chassisfesten Lagerteil (8) und anderenends am Lenker (2) oder am lenkerfesten Lagerteil (7) befestigt ist,
**dadurch gekennzeichnet,**
daß der Lenker (2) aus Faserverbundwerkstoff besteht,
daß der Lenker als Blattfederung (2) ausgebildet ist und
daß die Blattfederung (2) U-förmig ausgebildet ist und zwei im wesentlichen äquidistant zueinander verlaufende Federschenkel (14,15) aufweist, die einenends am lenkerfesten Lagerteil (7) befestigt und enderenends über einen Steg (18) miteinander verbunden sind, an dem das Rad (3) gehaltert ist.

2. Radaufhängung nach Anspruch 1,
**dadurch gekennzeichnet,**
daß die Blattfederung (2) oder die Federschenkel (14,15) eine S-förmige Vorkrümmung aufweisen, die bei vertikaler Belastung des Rades (3) den Lenker (2) verlängert und bei Entlastung verkürzt.

3. Radaufhängung nach Anspruch 1 oder 2,
**dadurch gekennzeichnet,**
daß die Federschenkel (14,15) der Blattfederung (2) abschnittsweise als Biegeträger mit gleicher Biegenormalspannung, insbesondere als Rechteck-, Parabel-, Hyperbel- oder Keilblattfedern, ausgebildet sind.

4. Radaufhängung nach einem der Ansprüche 1 bis 3,
**dadurch gekennzeichnet,**
daß zwischen den Federschenkeln (14 und 15) wenigstens ein strebenartiges Stützelement (20) angeordnet ist, das an jedem Federschenkel (14,15) um eine senkrecht zur Längsrichtung des jeweiligen Federschenkeis (14,15) verlaufende Achse (21,22) schwenkbar gelagert ist, wobei sich das Stützelement (20) zwischen den Federschenkeln (14,15) senkrecht zur Längserstreckung der Federschenkel (14,15) längserstreckt.

5. Radaufhängung nach einem der Ansprüche 1 bis 4,
**dadurch gekennzeichnet,**
daß am Steg (18) eine Radhalterung (25) befestigt ist, an der eine das Rad (3) lagernde Radlagerung befestigt ist.

6. Radaufhängung nach Anspruch 5,
**dadurch gekennzeichnet,**
daß die Radhalterung (25) einen Träger (28) aufweist, an dem sich Dämpfermittel (29) abstützen, die den Lenker (2) am Chassis (5) dämpfend abstützen.

7. Radaufhängung nach einem der Ansprüche 1 bis 6,
**dadurch gekennzeichnet,**
daß die Drehstabfederung zwei in Reihe geschaltete Drehstabfedern (10,12) aufweist, die koaxial zueinander angeordnet sind, wobei die erste Drehstabfeder (10) einenends am Lenker (2) oder am lenkerfesten Lagerteil (7) und anderenends direkt oder über ein Kopplungsglied (11) an dem einen Ende der zweiten Drehstabfeder (12) befestigt ist, die mit ihrem anderen Ende am Chassis (5) oder am chassisfesten Lagerteil (8) befestigt ist.

8. Radaufhängung nach Anspruch 7,
**dadurch gekennzeichnet,**
daß zumindest die eine Drehstabfeder (10) rohrförmig ausgebildet ist und die andere Drehstabfeder (12) konzentrisch umgibt.

9. Radaufhängung nach einem der Ansprüche 1 bis 8,
**dadurch gekennzeichnet,**
daß ein Drehstabstabilisator (13) aus Faserverbundwerkstoff vorgesehen ist, der rohrförmig ausgebildet ist, sich koaxial zur Schwenkachse (9) erstreckt, die Drehstabfederung (10,11,12) konzentrisch umgibt, einenends am Lenker (2) oder am lenkerfesten Lagerteil (7) und anderenends an einem Lenker oder an einem lenkerfesten Lagerteil einer auf derselben Fahrzeugachse gegenüberliegend angeordneten, entsprechend aufgebauten zweiten Radaufhängung befestigt ist.

10. Radaufhängung nach einem der Ansprüche 1 bis 9,
**dadurch gekennzeichnet,**
daß der Lenker (2) als Längslenker ausaebildet ist, der sich im wesentlichen parallel zur Längsachse (X) des Fahrzeuges erstreckt, uns daß die Schwenkachse (9) parallel zur Querachse (Y) des Fahrzeuges verläuft.

11. Radaufhängung nach Anspruch 10,
**dadurch gekennzeichnet,**
daß das Rad (3) so am Steg (18) gehaltert ist, daß eine Radachse (19), um welche sich das Rad (3) dreht, in Längsrichtung (X) des Fahrzeuges vom Steg (18) einen Abstand (e) aufweist.
